# EUROPEAN PATENT APPLICATION

(11) **EP 4 529 188 A1**
(43) Date of publication of application: **26.03.2025**
(21) Application number: 23807061.9
(22) Date of filing: 19.05.2023
(51) Int. Cl.: H04N 21/431

(54) **LIVE-STREAMING METHOD AND APPARATUS, AND DEVICE, MEDIUM AND PROGRAM PRODUCT**

(30) Priority: 19.05.2022 CN 202210558166
(71) Applicant: Beijing Zitiao Network Technology Co., Ltd., Beijing 100190 (CN)
(72) Inventor: LI, Yijie, Beijing 100028 (CN); ZHONG, Ke, Beijing 100028 (CN)
(74) Representative: Dentons UK and Middle East LLP
(86) International application number: PCT/CN2023/095262
(87) International publication number: WO 2023/222112

(57) **Abstract**

Provided in the present disclosure are a live-streaming method and apparatus, a device, a storage medium and a program product. The method comprises: displaying a first target live-streaming account identifier and a first live-streaming account identifier corresponding to a first live-streaming room currently on live; and in response to a preset condition being met, displaying starting live-streaming prompt information and a second live-streaming account identifier corresponding to a second live-streaming room; wherein, the first live-streaming room and the second live-streaming room are associated with the first target live-streaming account identifier.

## Description

### CROSS-REFERENCE TO RELATED APPLICATIONS

The present disclosure is based on and claims the priority to the Chinese Patent Application No. 202210558166.X entitled "LIVE-STREAMING METHOD AND APPARATUS, AND DEVICE, MEDIUM AND PROGRAM PRODUCT" and filed on May 16, 2022, the disclosure of which is incorporated by reference herein in its entirety.

### TECHNICAL FIELD

The present disclosure relates to the field of computer technology, and particularly to a live-streaming method and apparatus, a device, a medium and a program product.

### BACKGROUND

A common live-streaming room generally can only have one anchor on live, but an ordered live-streaming room (also called an ordered room) for ranking anchors of different live-streaming rooms, may allow different anchors to live-stream in the same live-streaming room in different time periods. However, in the related art, the ordered live-streaming room cannot meet user requirements.

### SUMMARY

The present disclosure provides a live-streaming method and apparatus, a device, a storage medium, and a program product, to solve the above technical problem to some extent.

In a first aspect of the present disclosure, there is provided a live-streaming method, comprising:
displaying a first target live-streaming account identifier and a first live-streaming account identifier corresponding to a first live-streaming room currently on live;
in response to a preset condition being met, displaying starting live-streaming prompt information and a second live-streaming account identifier corresponding to a second live-streaming room; wherein, the first live-streaming room and the second live-streaming room are associated with the first target live-streaming account identifier.

In a second aspect of the present disclosure, there is provided a live-streaming apparatus, comprising:
a display module, configured to display a first target live-streaming account identifier and a first live-streaming account identifier corresponding to a first live-streaming room currently on live; and
in response to a preset condition being met, display starting live-streaming prompt information and a second live-streaming account identifier corresponding to a second live-streaming room; wherein, the first live-streaming room and the second live-streaming room are associated with the first target live-streaming account identifier.

In a third aspect of the present disclosure, there is provided an electronic device, comprising one or more processors, a memory; and one or more programs, wherein the one or more programs are stored in the memory and executed by the one or more processors, the programs comprising instructions for performing the method according to the first aspect or the second aspect.

In a fourth aspect of the present disclosure, there is provided a non-transitory computer-readable storage medium containing a computer program which, when executed by one or more processors, causes the processor to perform the method according to the first aspect or the second aspect.

In a fifth aspect of the present disclosure, there is provided a computer program product comprising computer program instructions which, when run on a computer, cause the computer to perform the method according to the first aspect.

### BRIEF DESCRIPTION OF THE DRAWINGS

In order to more clearly illustrate the technical solutions of the embodiments of the present disclosure, the drawings required in the embodiments will be briefly described below, and the drawings herein incorporated in and forming a part of the specification illustrate embodiments consistent with the present disclosure and, together with the description, serve to explain the technical solutions of the present disclosure. It is to be understood that the following drawings only show certain embodiments of the present disclosure and are therefore not to be considered limitations of its scope, and those skilled in the art could also obtain other related drawings from there drawings without paying out creative labor.
Fig. 1 is a schematic diagram of a live-streaming architecture according to an embodiment of the present disclosure;
Fig. 2 is a schematic diagram of a hardware configuration of an exemplary electronic device according to an embodiment of the present disclosure;
Figs. 3-8 are schematic diagrams of a first display interface according to embodiments of the present disclosure;
Figs. 9A-9C are schematic diagrams of a first display interface according to embodiments of the present disclosure;
Fig. 10A is a schematic diagram of a task interface according to an embodiment of the present disclosure;
Fig. 10B is a schematic diagram of an reservation prompt interface according to an embodiment of the present disclosure;
Fig. 11 is a schematic diagram of a task interface according to an embodiment of the present disclosure;
Fig. 12 is a schematic diagram of a third live-streaming interface according to an embodiment of the present disclosure;
Figs. 13A-13B are schematic diagrams of a task interface according to an embodiment of the present disclosure;
Fig. 14 is a schematic flowchart of a live-streaming method according to an embodiment of the present disclosure.

### DETAILED DESCRIPTION

To make the objectives, technical solutions and advantages of the present disclosure more apparent, the present disclosure will be described in further detail below with reference to the accompanying drawings in conjunction with specific embodiments.

It is to be noted that technical terms or scientific terms used in the embodiments of the present disclosure should have a general meaning as understood by one having ordinary skill in the art to which the present disclosure belongs, unless otherwise defined. The use of "first," "second," and similar words in the embodiments of the present disclosure is not intended to indicate any order, quantity, or importance, but rather is used to distinguish one element from another. The word "comprise" or "include" or the like means that an element or item preceding the word comprises an element or item listed after the word and its equivalent, but does not exclude other elements or items. The word "connected" or "coupled" or the like is not restricted to a physical or mechanical connection, but may include an electrical connection, whether direct or indirect. The words "up", "down", "left", "right", and the like are used only to indicate relative positional relationships, and when an absolute position of an object being described is changed, the relative positional relationships may also be changed accordingly.

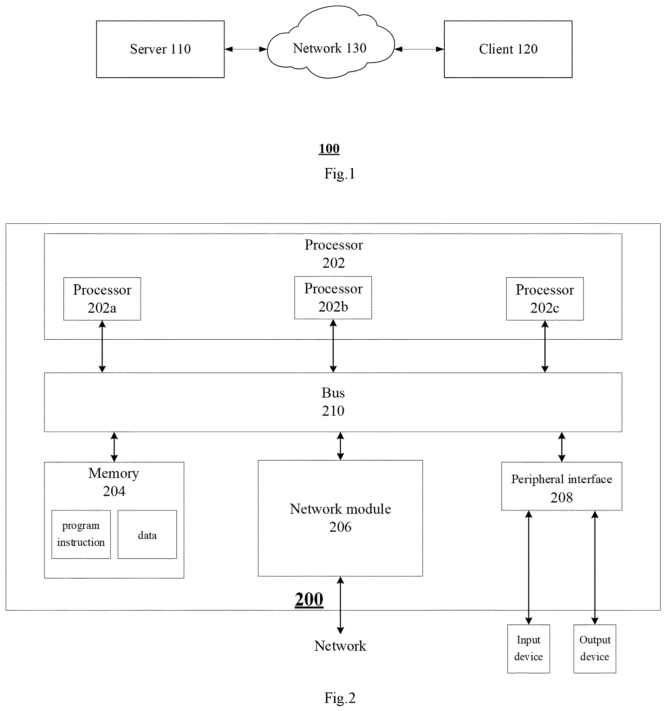

Fig. 1 shows a schematic diagram of a live-streaming architecture according to an embodiment of the present disclosure. Referring to Fig. 1, the live-streaming architecture 100 may include a server 110, a terminal 120, and a network 130 that provides a communication link. The server 110 and the terminal 120 may be connected through the wired or wireless network 130. The server 110 may be an independent physical server, a server cluster or a distributed system consisting of a plurality of physical servers, or a cloud server providing basic cloud computing services such as cloud service, cloud database, cloud computing, cloud functions, cloud storage, network service, cloud communication, middleware service, domain name service, security service, CDN, and big data and artificial intelligence platforms.

The terminal 120 may be implemented by hardware or software. For example, when the terminal 120 is implemented by hardware, it may be various electronic devices having a display screen and supporting page display, including but not limited to a smart phone, a tablet computer, an e-book reader, a laptop portable computer, a desktop computer, and the like. When the terminal 120 is implemented by software, it can be installed in the above listed electronic devices; it may be implemented as a plurality of software or software modules (for example, software or software modules for providing distributed services), or may be implemented as a single software or software module, which is not specifically limited herein.

It should be noted that the live-streaming method provided by the embodiment of the present application may be executed by the terminal 120, and may also be executed by the server 110. It should be understood that the number of the terminal, network, and server in Fig. 1 are illustrative only and not intended to be limiting. There may be any number of terminals, networks, and servers, as desired for an implementation.

Fig. 2 shows a schematic diagram of a hardware configuration of an exemplary electronic device 200 according to an embodiment of the present disclosure. As shown in Fig. 2, the electronic device 200 may include: a processor 202, a memory 204, a network module 206, a peripheral interface 208, and a bus 210. The processor 202, the memory 204, the network module 206, and the peripheral interface 208 are communicatively connected to each other within the electronic device 200 via a bus 210.

The processor 202 may be a central processing unit (CPU), an image processor, a neural network processor (NPU), a microcontroller (MCU), a programmable logic device, a digital signal processor (DSP), an application specific integrated circuit (ASIC), or one or more integrated circuits. The processor 202 may be used to perform functions related to the techniques described in this disclosure. In some embodiments, the processor 202 may also include multiple processors integrated into a single logic component. For example, as shown in Fig. 2, the processor 202 may include a plurality of processors 202a, 202b, and 202c.

The memory 204 may be configured to store data (e.g., instructions, computer code, etc.). As shown in Fig. 2, the data stored in the memory 204 may include program instructions (e.g., program instructions for implementing the live-streaming method according to the embodiment of the present disclosure) as well as data to be processed (e.g., the memory may store configuration files for other modules, etc.). The processor 202 may also access program instructions and data stored in the memory 204 and execute the program instructions to operate on the data to be processed. The memory 204 may include volatile memory devices or non-volatile memory devices. In some embodiments, the memory 204 may include Random Access Memory (RAM), Read Only Memory (ROM), optical disk, magnetic disk, hard disk, Solid State Disk (SSD), flash memory, memory stick, and the like.

The network module 206 may be configured to provide the electronic device 200 with communications with other external devices via a network. The network may be any wired or wireless network capable of transmitting and receiving data. For example, the network may be a wired network, a local wireless network (e.g., Bluetooth, WiFi, Near Field Communication (NFC), etc.), a cellular network, the internet, or a combination of the above. It is to be understood that the type of network is not limited to the specific examples described above. In some embodiments, the network module 206 may include any combination of any number of network interface controllers (NICs), radio frequency modules, transceivers, modems, routers, gateways, adapters, cellular network chips, and the like.

The peripheral interface 208 may be configured to connect the electronic device 200 with one or more peripheral devices to enable input and output of information. For example, the peripheral devices may include input devices such as a keyboard, mouse, touch pad, touch screen, microphone, various sensors, and output devices such as a display, speaker, vibrator, indicator light.

The bus 210 may be configured to transmit information between various components of the electronic device 200 (e.g., the processor 202, the memory 204, the network module 206, and the peripheral interface 208), such as an internal bus (e.g., a processor-memory bus), an external bus (a USB port, a PCI-E bus).

It should be noted that although the architecture of the electronic device 200 described above only shows the processor 202, the memory 204, the network module 206, the peripheral interface 208 and the bus 210, in a specific implementation, the architecture of the electronic device 200 may also include other components necessary for normal operation. In addition, it can be understood by those skilled in the art that the architecture of the electronic device 200 described above may also include only the components necessary to implement the embodiments of the present disclosure, and not necessarily all the components shown in the figure.

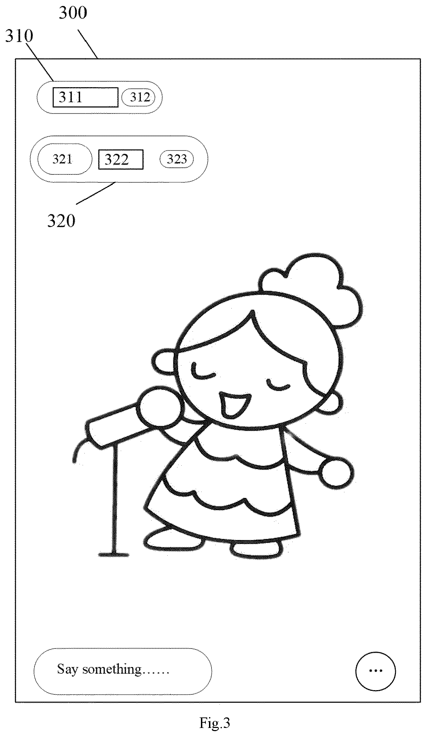

Referring to Fig. 3, Fig. 3 shows a schematic diagram of a first live-streaming interface according to an embodiment of the present disclosure. In Fig. 3, a user enters, through a corresponding entry, a first live-streaming interface 300, in which it is displayed that a first anchor anchorA of a first live-streaming room roomA is currently live-streaming a first program programA.

It should be noted that, in some embodiments, the first live-streaming interface 300 may be a live-streaming interface of a first target live-streaming room (e.g., an ordered live-streaming room, an ordered room live-streaming room) room_1, that is, there exists a first target live-streaming room_1, and the live-streaming interface of the first target live-streaming room_1 displays live-streaming pictures of the live-streaming rooms associated therewith; that is, the live-streaming interface displays live-streaming pictures of the live-streaming rooms participating in the performance of programs of the ordered live-streaming room, and sequentially displays the live-streaming pictures of the live-streaming rooms according to starting live-streaming (going on microphone, performance) times of the live-streaming rooms in the ordered room live-streaming room.

In some embodiments, the first live-streaming interface 300 may not correspond to a specific live-streaming room, but only corresponds to a first target live-streaming account account_room1, and displays a live-streaming interface of a corresponding live-streaming room according to a preset ranking, that is, when the first live-streaming room roomA is starting live-streaming, the live-streaming interface of the first live-streaming room roomA is directly displayed, and live-streaming pictures of the first live-streaming room roomA and a related identifier of the ordered live-streaming room, such as a live-streaming account identifier, a follow identifier, are displayed on the live-streaming interface of the first live-streaming room roomA, and a related identifier of the first live-streaming room roomA may also be displayed, such as an account identifier, a follow identifier; when the first live-streaming room roomA is stopping live-streaming and the second live-streaming room roomB is starting live-streaming, the live-streaming interface of the second live-streaming room roomB is directly displayed, live-streaming pictures of the second live-streaming room roomB and the related identifier of the ordered live-streaming room are displayed on the live-streaming interface of the second live-streaming room roomB, and a related identifier of the second live-streaming room roomB may be also displayed.

In some embodiments, a first target live-streaming component 310 for the first target live-streaming account account_room1 may be displayed in the first live-streaming interface 300, which may include a first target live-streaming account identifier 311 and an interaction identifier 312 of the first target live-streaming account. The first target live-streaming account identifier 311 may indicate the first target live-streaming account account_roomA, and may further indicate a first activity theme identifier themeA of a first activity to which a first program programA currently on live belongs. The interaction identifier 312 of the first target live-streaming account account_room1 may be used to follow a control of the first target live-streaming account account_room1, or may be another control, such as joining a fans club. For example, a user may perform a trigger operation O1 on the interaction control 312 of the first target live-streaming account to generate an instruction instruction_room1 following the first target live-streaming account; and in response to the instruction_room1 following the first target live-streaming account, the user may follow the first target live-streaming account account_room1 through a corresponding terminal terminal_user (for example, a live-streaming room APP, etc.). Compared with a traditional ordered live-streaming mode in which an ordered live-streaming account cannot be followed, for example, the account_room1, the present application adds a follow control for the ordered live-streaming account, which is beneficial to accumulation of users following the ordered live-streaming account, and is also convenient for the user to quickly and conveniently find an interested ordered live-streaming account in the future.

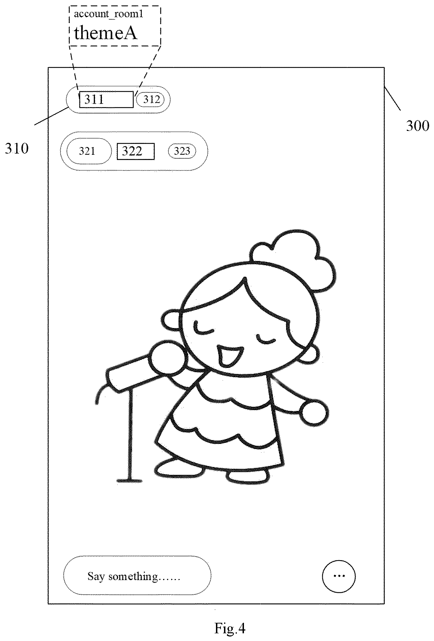

In some embodiments, in response to entering the first display interface 300 for a preset duration T1, a first animation animation1 with respect to the first target live-streaming account account_room1 and the first activity theme identifier themeA is displayed. The first animation animation1 may further emphasize the first target live-streaming account account_room1 where the user is currently located, and a first activity to which the first program programA currently on live belongs, to facilitate the user to timely learn about the current overall situation of the first target live-streaming account account_room1, so that, when the user is interested in the current content, the user can be guided to follow the first target live-streaming account account_room1 where the user is currently located, by using the interaction identifier 312 of the first target live-streaming account provided in an associated area of the first target live-streaming account identifier 311, favorably improving the user's attention to the first target live-streaming account. For example, the first animation animation1 may be that the first target live-streaming account account_room1 and the first activity theme identifier themeA are alternately displayed with a first font size and a second font size, respectively, where the first font size is different from the second font size; when the first target live-streaming account account_room1 is displayed with the first font size, the first activity theme identifier themeA is displayed with the second font size, and when the first target live-streaming account account_room1 is displayed with the second font size, the first activity theme identifier themeA is displayed with the first font size, so that a prompt effect of playing with large and small font sizes alternately is achieved; as shown in the first target live-streaming component 310 in Fig. 4, Fig. 4 shows a schematic diagram of a first live-streaming interface according to an embodiment of the present disclosure.

In some embodiments, the first live-streaming interface 300 may also display the interaction control 320 for the first target live-streaming account account_room 1. Further, in some embodiments, the interaction control 320 may include a task identifier 321 (i.e., a program list identifier), as an entry for displaying a program list listA of the current first target live-streaming account account_room 1. In some embodiments, the interaction control 320 further includes a first live-streaming account identifier 322 corresponding to the first live-streaming room roomA currently on live, for indicating a first live-streaming account account_roomA of the first program programA currently on live. In some embodiments, the interaction control 320 also displays an interaction identifier 323 corresponding to the current first live-streaming account identifier 322. Therefore, by means of the aggregated display of the program list identifier, the account identifier and the interaction identifier, the user interaction is facilitated, the user cognition is improved, and the user experience is improved.

For example, in Fig. 3, the current first live-streaming account identifier 322 is shown as the first live-streaming account account_roomA, then the interaction identifier 323 corresponding to the first live-streaming account identifier 322 may be used to follow the first live-streaming account account_roomA. The user may perform a second trigger operation O2 on the interaction identifier 323 to generate an instruction instruction_roomA following the first live-streaming account account_roomA. In response to the instruction instruction_roomA, the user may follow the current first live-streaming room or the first live-streaming account account_roomA through a corresponding terminal terminal_user (e.g., a live-streaming room APP, etc.).

In the embodiment of the present application, the interaction identifier of the first target live-streaming account identifier may also be referred to as a first target interaction identifier, or an interaction identifier corresponding to the first target live-streaming account identifier; the interaction identifier of the first live-streaming account identifier may also be referred to as a first interaction identifier, or an interaction identifier corresponding to the first live-streaming account identifier; the interaction identifier of the second live-streaming account identifier may also be referred to as a second interaction identifier, or an interaction identifier corresponding to the second live-streaming account identifier.

The first target interaction identifier may be used to follow a first target live-streaming account, for example, a follow control for following the first target live-streaming account, and the first interaction identifier may be used to follow a first live-streaming account, for example, a follow control for following the first live-streaming account, and the second interaction identifier may be used to follow a second live-streaming account, for example, a follow control for following the second live-streaming account.

Since, in the related art, a correlation between an ordered live-streaming account and its associated live-streaming account is not strong, on one hand, after the user enters an ordered live-streaming interface corresponding to the first target live-streaming account, the user often easily follows only the ordered live-streaming account (for example, the first target live-streaming account account_room 1) or follows only a live-streaming account (for example, the first live-streaming account account_roomA) corresponding to a live-streaming room on live, and does not easily follow both at the same time, which is not beneficial to establishing an association between the ordered live-streaming account and the corresponding live-streaming room account by the user, reducing the user experience. On the other hand, the user cannot perceive a difference between the ordered live-streaming interface corresponding to the first target live-streaming account and a common live-streaming interface of a single anchor to a certain extent. According to the embodiment of the present disclosure, by setting a linkage between the interaction identifier of the first target live-streaming account and the interaction identifier of a corresponding ranked live-streaming account, when a user follows one of the first target live-streaming account or the corresponding ranked live-streaming account, the user is prompted to follow the other party at the same time, avoiding the user from missing following the interested first target live-streaming account or the ranked live-streaming account; and improving a visual perception of the user on different live-streaming modes of the ordered main live-streaming interface, thereby improving the user experience.

In some embodiments, in response to a trigger operation on the interaction identifier of the first live-streaming account identifier, the interaction identifier corresponding to the first live-streaming account identifier is switched from a first state to a second state. For example, the first state of the interaction identifier 312 of the first live-streaming account identifier may be a display state, and when the interaction identifier 312 is a follow identifier, the first state may also be a state indicating unfollowed, and after the user performs a trigger operation on the interaction identifier 312 of the first live-streaming account identifier, the interaction identifier 312 changes into a second state, and the second state may be a hidden state, or may also be a followed state, for example, the interaction identifier 312 is switched from an unfollowed identifier to a followed identifier. In the embodiment of the present application, the switching the state of the interaction identifier may be switching a display mode of the interaction identifier or adjusting an interactive state.

In response to a trigger operation on the interaction identifier corresponding to the first target live-streaming account identifier, the interaction identifier of the first target live-streaming account identifier is highlighted. For example, the user may trigger the interaction identifier 312 of the first target live-streaming account identifier to follow the first target live-streaming account account_room1, and at this time, the interaction identifier 323 corresponding to the first live-streaming account identifier 322 may be highlighted in association.

That is, if one of the interaction identifier of the first live-streaming account identifier or the interaction identifier of the first target live-streaming account identifier is triggered, the other thereof may also be highlighted. For example, when the interaction identifier of the first target live-streaming account identifier is triggered, the interaction identifier of the first live-streaming account identifier may be highlighted. For another example, when the interaction identifier of the first live-streaming account identifier is triggered, the interaction identifier of the first target live-streaming account identifier may be highlighted.

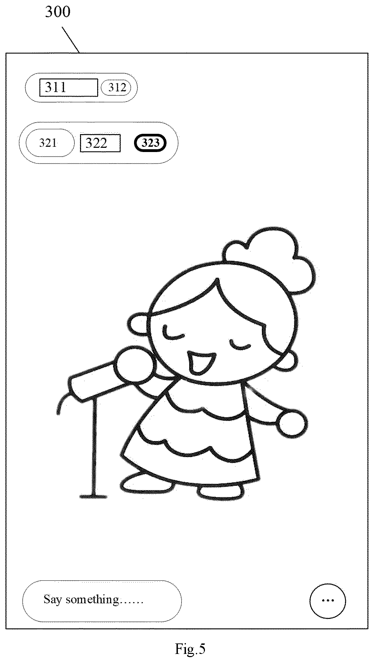

The highlighting may be a display mode capable of prompting, such as a highlighted or blinked display; as shown in Fig. 5, Fig. 5 shows a schematic diagram of a first live-streaming interface according to an embodiment of the present disclosure. In Fig. 5, when the user follows the first target live-streaming account account_room1, the interaction identifier 323 corresponding to the first live-streaming account identifier 322 may be highlighted. At this time, the interaction identifier 312 of the first target live-streaming account may be in a hidden state, and the interaction identifier 323 corresponding to the first live-streaming account identifier 322 may be in a highlighted state. Therefore, the user can easily associate information of the first target live-streaming account account_room1 with information of the first live-streaming account account_roomA, avoiding the user from missing following the interested ordered live-streaming account or a live-streaming account of a live-streaming room associated therewith, and improving the perception of the user on the ordered live-streaming interface corresponding to the first target live-streaming account.

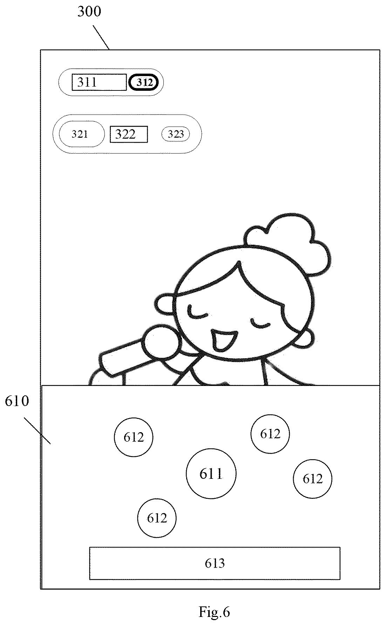

In some embodiments, in response to a trigger operation on the interaction identifier corresponding to the first target live-streaming account identifier, the interaction identifier corresponding to the first target live-streaming account identifier is highlighted. For example, the user may trigger the interaction identifier 323 corresponding to the first live-streaming account identifier 322 to follow the first live-streaming account account_roomA, and at this time, the interaction identifier 312 of the first target live-streaming account may be highlighted in association. The highlighting may be a display mode capable of prompting, such as a highlighted or blinked display; as shown in Fig. 6, Fig. 6 shows a schematic diagram of a first display interface according to an embodiment of the present disclosure. In Fig. 6, when the user follows the first live-streaming account account_roomA, the interaction identifier 312 of the first target live-streaming account may be highlighted. At this time, the interaction identifier 323 corresponding to the first live-streaming account identifier 322 may be in a hidden state, and the interaction identifier 312 of the first target live-streaming account may be in a highlighted state.

In some embodiments, in response to a trigger operation on the interaction identifier corresponding to the first target live-streaming account identifier or the second target live-streaming account identifier, an interaction identifier for both the first target live-streaming account identifier and the first live-streaming account identifier (e.g., a one-click dual-follow identifier of the first target live-streaming account identifier and the first live-streaming account identifier) or an interaction identifier for both the first target live-streaming account identifier and the second live-streaming account identifier (e.g., a one-click dual-follow identifier of the first target live-streaming account identifier and the second live-streaming account identifier), is displayed; or an interaction panel for the first target live-streaming account identifier is displayed in the first live-streaming interface.

In practical applications, the user may follow the first live-streaming account account_roomA of the first live-streaming room roomA for the first time, or may not follow the first anchor account account_roomA for the first time. At this time, it may be determined whether the user follows the first live-streaming account account_roomA for the first time, and in the case of following for the first time, it indicates that the user may follow less the first target live-streaming account account_room1 associated with the first live-streaming account account_roomA, and the user may be prompted in a more emphasized manner than highlighting the interaction identifier 312 of the first target live-streaming account, so as to guide the user to follow the first target live-streaming account account_room1.

In some embodiments, in response to a trigger operation on the interaction identifier corresponding to the first live-streaming account identifier or the second live-streaming account identifier, it is determined whether the trigger operation on the interaction identifier corresponding to the first live-streaming account identifier or the second live-streaming account identifier is a first operation for the interaction identifier corresponding to the first live-streaming account identifier or the second live-streaming account identifier. Further, in some embodiments, in response to that the trigger operation on the interaction identifier corresponding to the first live-streaming account identifier or the second live-streaming account identifier is the first operation, an interaction panel for the first target live-streaming account identifier is displayed in the first live-streaming interface, to prompt following the first target live-streaming account. For example, the second trigger operation O2 made by the user on the interaction identifier 323 corresponding to the first live-streaming account identifier 322 is that the user follows the first live-streaming account account_roomA for the first time, then a follow panel 610 of the first target live-streaming account account_room1 may be popped out in the first live-streaming interface 300, as shown in Fig. 6. In Fig. 6, the follow panel 610 may display a first target live-streaming account identifier 611 of the first target live-streaming account account_room1 and a live-streaming identifier 612 of a corresponding live-streaming room, and may further include a panel interaction identifier 613. The user may follow the first target live-streaming account account _room1 by a third trigger operation O3 on the panel interaction identifier 613, where the interaction identifier 613 may be a like, a favorite, or the like. In this way, the perception of the user on the ordered live-streaming interface corresponding to the first target live-streaming account is enhanced by popping up a follow panel, also avoiding the user from missing following the first target live-streaming account.

In some embodiments, in response to a trigger operation on the interaction identifier corresponding to the first live-streaming account identifier, an interaction identifier, also referred to as a composite interaction identifier, for both the first target live-streaming account identifier and the first live-streaming account identifier, is displayed. In response to a trigger operation on the composite interaction identifier, the state of the first target interaction identifier and the state of the first interaction identifier can be switched.

Optionally, if the trigger operation is triggered by the first interaction identifier, the position of the composite interaction identifier and the position of the first interaction identifier may be the same or similar. If the position of the composite interaction identifier is the same as that of the first interaction identifier, the first interaction identifier can be hidden, or the composite interaction identifier is controlled to cover the first interaction identifier.

If the trigger operation is triggered by the second interaction identifier, the position of the composite interaction identifier and the position of the second interaction identifier may be the same or similar. If the position of the composite interaction identifier is the same as that of the second interaction identifier, the second interaction identifier can be hidden, or the composite interaction identifier is controlled to cover the second interaction identifier.

For example, in some possible implementations, when each of the interaction identifiers is a follow identifier, the user may first trigger following the first live-streaming account through the first interaction identifier. Then, a composite interaction identifier may be displayed to guide the user to follow the first target live-streaming account. The user can follow the first target live-streaming account by triggering the composite interaction identifier. Correspondingly, the state of the first target interaction identifier and the state of the first interaction identifier can be switched.

Similarly, for the trigger operation on the interaction identifier of the second live-streaming account identifier, it is also possible to trigger displaying the composite interaction identifier. Accordingly, in response to the trigger operation on the composite interaction identifier, the state of the first target interaction identifier and the state of the second interaction identifier can be switched.

For example, in some possible implementations, when each of the interaction identifiers is a follow identifier, the user may first trigger following the second live-streaming account through the second interaction identifier. Then, a composite interaction identifier may be displayed to guide the user to follow the first target live-streaming account. The user can follow the first target live-streaming account by triggering the composite interaction identifier. Correspondingly, the state of the first target interaction identifier and the state of the second interaction identifier can be switched.

In the above examples, switching the state of the first target interaction identifier may include switching the state of the first target interaction identifier from a first state to a second state. For example, the first state of the first target interaction identifier may be a display state, and after the user performs a trigger operation on the composite interaction identifier, the first target interaction identifier changes into a second state, where the second state may be a hidden state or an identifier indicating a followed state, such as a followed identifier.

That is, after the user triggers an interaction for a live-streaming room, a composite interaction identifier may be displayed so that the user triggers an interaction for other live-streaming rooms. Therefore, the interaction mode is enriched, and the interaction efficiency is improved.

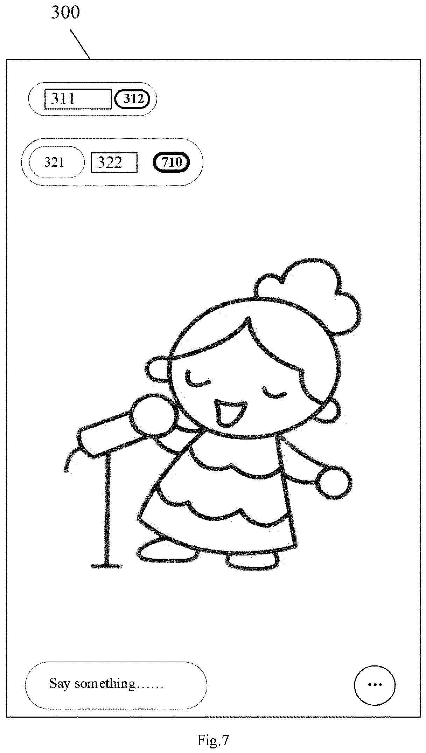

In some embodiments, in response to that the trigger operation on the interaction identifier corresponding to the first live-streaming account identifier is not the first operation, an interaction identifier for both the first target live-streaming account identifier and the first live-streaming account identifier is displayed. In addition, the interaction identifier corresponding to the first live-streaming account identifier may be hidden, and the interaction identifier for the first target live-streaming account identifier and the first live-streaming account identifier may be highlighted, where the interaction identifier for both the first target live-streaming account identifier and the first live-streaming account identifier is used to follow the first target live-streaming account identifier and the first live-streaming account identifier at the same time. For example, the interaction identifier for both the first target live-streaming account identifier and the first live-streaming account identifier may be a one-click dual-follow identifier; the second trigger operation O2 made by the user on the anchor follow account 323 is not that the user follows the first anchor account account_anchorA for the first time, so that the interaction identifier 323 corresponding to the first live-streaming account identifier 322 may be hidden in the first live-streaming interface 300 and a one-click, dual-follow control 710 is displayed, that is, the one-click, dual-follow control 710 is used to replace the interaction identifier 323 corresponding to the first live-streaming account identifier 322; as shown in Fig. 7, Fig. 7 shows a schematic diagram of a first display interface according to an embodiment of the present disclosure. In Fig. 7, the one-click, dual-follow control 710 may be disposed in the interaction control 320, for example, the one-click, dual-follow control 710 is displayed at an associated position of the interaction identifier 323 corresponding to the first live-streaming account identifier 322, and at this time, the interaction identifier 323 corresponding to the first live-streaming account identifier 322 may be in a hidden state; the one-click, dual-follow control 710 may also be emphasized (e.g., highlighted), and at this time the one-click, dual-follow control 710 is in a highlighted state. The user may perform a fourth trigger operation O4 on the one-click, dual-follow control 710 to follow the first target live-streaming account account_room1 and the first live-streaming account account_roomA at the same time. In response to the fourth trigger operation O4, the one-click, dual-follow control 710 and the interaction identifier 312 of the first target live-streaming account are hidden. Further, in some embodiments, the one-click, dual-follow control 710 and the interaction identifier 312 of the first target live-streaming account may be hidden after an animation effect with respect to the one-click, dual-follow control 710 and the first ordered room follow control 312 is played. For example, the one-click, dual-follow control 710 and the interaction identifier 312 of the first target live-streaming account may perform a zoom-in and fade animation. In this way, the user can conveniently and quickly follow the first target live-streaming account account_room1 and the first live-streaming account account_roomA that are interested through the one-click, dual-follow control.

In some embodiments, in response to a trigger operation on the first interaction identifier corresponding to the first live-streaming room or the second interaction identifier corresponding to the second live-streaming room, displaying composite interaction prompt information; and in response to the trigger operation on the first interaction identifier or the second interaction identifier, switching a state of the first target interaction identifier corresponding to the first target live-streaming account identifier, and switching the state of the first interaction identifier or the second interaction identifier. The composite interaction prompt information is used for indicating that synchronous interaction of the first live-streaming account and the first target live-streaming account can be realized by triggering the first interaction identifier or the second interaction identifier.

For example, the composite interaction prompt information may guide the user to enable synchronous interaction, such as synchronous follow, of the first live-streaming account and the first target live-streaming account by triggering the first interaction identifier (e.g., the interaction identifier of the first target live-streaming account) or the second interaction identifier (e.g., the interaction identifier of the second live-streaming account).

That is, the user may be guided to follow the first live-streaming account through the composite interactive prompt information. For example, if the user triggers the first interaction identifier, the composite interactive prompt information may be displayed to guide the user to trigger the first interaction identifier again. After the user triggers the first interaction identifier for the second time, the user follows the first target live-streaming account again. Accordingly, the states of the first target interaction identifier and the first interaction identifier are switched.

For another example, if the user triggers the second interaction identifier, composite interactive prompt information may be displayed to guide the user to trigger the second interaction identifier again. After the user triggers the second interaction identifier for the second time, the user follows the first target live-streaming account again. Accordingly, the states of the first target interaction identifier and the second interaction identifier are switched.

In some embodiments, in response to a trigger operation on the first interaction identifier corresponding to the first live-streaming room or the second interaction identifier corresponding to the second live-streaming room, switching a state corresponding to the first interaction identifier or the second interaction identifier, and switching the first interaction identifier or the second interaction identifier to display the composite interaction identifier;
in response to the trigger operation on the composite interaction identifier, switching the state of the first target interaction identifier corresponding to the first target live-streaming account identifier.

Each live-streaming room in an ordered display interface corresponding to the first target live-streaming account is on live according to a corresponding time period, and when a program of a next live-streaming room is about to start, the user can be prompted of starting live-streaming prompt information of the next live-streaming room, thereby facilitating the user to know the progress of the current live-streaming program and the next live-streaming program in time. Further, the interaction identifier 323 corresponding to the first live-streaming account identifier 322 and/or the interaction identifier 312 of the first target live-streaming account may be highlighted, to prompt the user that the current program is about to end, and he may follow the first live-streaming account of the first live-streaming room on live and/or the first target live-streaming account where the first live-streaming account is currently located.

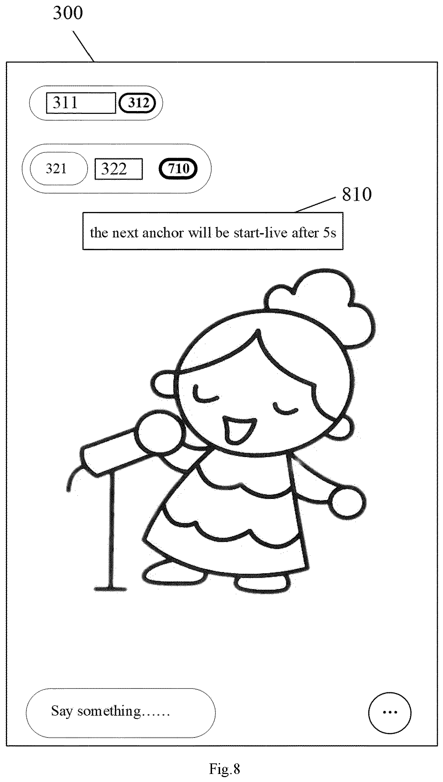

In some embodiments, in response to that a period from a current time to an starting live-streaming time corresponding to the second live-streaming room is less than a second preset duration, at least one of the following is performed: highlighting the interaction identifier corresponding to the first target live-streaming account identifier, highlighting the interaction identifier corresponding to the first live-streaming account identifier, highlighting the interaction identifier corresponding to the second live-streaming account identifier, or displaying a countdown identifier of the second live-streaming room so as to prompt a remaining time for starting live-streaming of the second live-streaming room. For example, when the first live-streaming room roomA is live-streaming a first program programA, and the second live-streaming room roomB will be live-streaming a second program programB after a duration T2, a countdown indicator 810 may be displayed in the first live-streaming interface 300, as shown in Fig. 8 which shows a schematic diagram of a first display interface according to an embodiment of the present disclosure. In Fig. 8, the countdown indicator 810 may display "the next anchor will start live-streaming after duration T2 (e.g., 5s)", and as time advances, T2 may count down and gradually decrease until the next anchor starts live-streaming. During the countdown, the interaction identifier 323 corresponding to the first live-streaming account identifier and/or the interaction identifier 312 of the first live-streaming account identifier may also be highlighted.

In some embodiments, in response to a preset condition being met, starting live-streaming prompt information and the second live-streaming account identifier corresponding to the second live-streaming room are displayed on the first live-streaming interface; wherein, the first live-streaming room and the second live-streaming room are associated with the first target live-streaming account identifier. Further, in some embodiments, the starting live-streaming prompt information and the second live-streaming account identifier corresponding to the second live-streaming room may be displayed on the interaction control 320. Further, in some embodiments, the preset condition includes: a period from the current time to the starting live-streaming time corresponding to the second live-streaming room being less than a first preset duration, or, the number of associated objects of the second live-streaming room being greater than a preset number. The starting live-streaming prompt information and/or the second live-streaming account identifier of the second live-streaming room can be displayed at a time earlier than the starting live-streaming time of the second live-streaming room by the first preset duration. The associated objects of the second live-streaming room may be objects interacting with the second live-streaming room, such as follow, favorite, like, for example, an object that follows the second live-streaming room. When the number of the associated objects reaches a preset number, the starting live-streaming prompt information and/or the second live-streaming account identifier of the second live-streaming room can be displayed so as to recommend the second live-streaming room.

In some embodiments, when the second live-streaming account identifier is displayed, an interaction identifier corresponding to the second live-streaming account identifier is displayed; and in response to a trigger operation on the interaction identifier corresponding to the second live-streaming account identifier, a state of the interaction identifier corresponding to the second live-streaming account identifier is switched. Similarly to the interaction identifier corresponding to the first live-streaming account identifier, the second live-streaming account identifier may also have a corresponding interaction identifier. For example, the interaction identifier corresponding to the second live-streaming account identifier may also be an interaction identifier such as a follow, like, favorite. After the user triggers the interaction identifier corresponding to the second live-streaming account identifier, the state of the interaction identifier corresponding to the second live-streaming account identifier may be switched, for example, switched from a display state into a hidden state or instead displaying other identifiers indicating "followed".

In some embodiments, the first target interaction identifier corresponding to the first target live-streaming account identifier is displayed at an associated position of the first target live-streaming account identifier;
the second interaction identifier corresponding to the second live-streaming account identifier is displayed at an associated position of the second live-streaming account identifier; and
in response to a trigger operation on any one of the first target interaction identifier and the second interaction identifier, the other of the first target interaction identifier and the second interaction identifier is highlighted.

Similarly to the first live-streaming account identifier, the interaction identifier of the second live-streaming account identifier may also have an association with the interaction identifier of the first target live-streaming account identifier. That is, if one of the interaction identifier of the second live-streaming account identifier or the interaction identifier of the first target live-streaming account identifier is triggered, the other may also be highlighted. For example, when the interaction identifier of the second live-streaming account identifier is triggered, the interaction identifier of the first target live-streaming account identifier may be highlighted. For another example, when the interaction identifier of the first target live-streaming account identifier is triggered, the interaction identifier of the second live-streaming account identifier may be highlighted.

In some embodiments, the associated position in interaction control 320 may also indicate countdown information of the first live-streaming room or the second live-streaming room. Further, the countdown information of the first live-streaming room may refer to countdown information of an end time of the first live-streaming room. The countdown information of the second live-streaming room may refer to countdown information of an starting live-streaming time of the second live-streaming room.

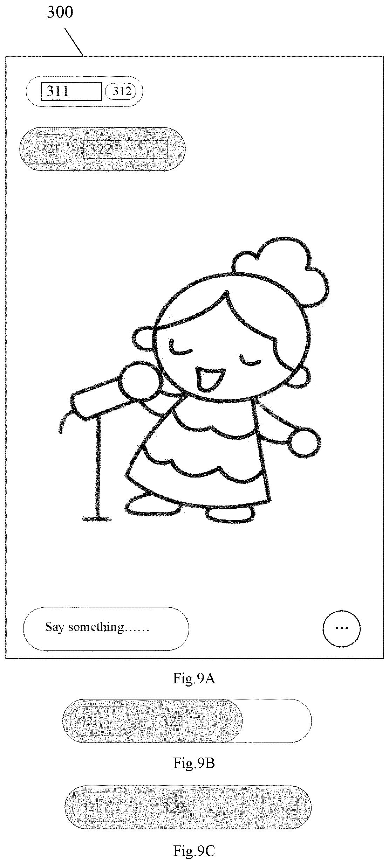

In some embodiments, the associated position in interaction control 320 may also display a second animation animation2 of the countdown information of the first live-streaming room and/or the countdown information of the second live-streaming room. Still further, in some embodiments, the second animation animation2 may indicate the countdown information. For example, referring to Figs. 9A-9C, Figs. 9A-9C show schematic diagrams of an ordered room display interface according to embodiments of the present disclosure. In Fig. 9A, there is a duration T3 left from the current time to the start of the second program programB in the second live-streaming room, then the countdown information of the duration T3, and the second live-streaming room account identifier of the second live-streaming room account account_roomB corresponding to the second program programB may be displayed at the associated position in the interaction control 320. The second animation animation2 may highlight the interaction control 320, such as highlighting the program task identifier 321 and displaying a color effect on the interaction control 320. Further, the color effect may be a color progress bar, the length of which changes from 0 to a length of the interaction control 320 until the interaction control 320 is completely covered, as shown in Figs. 9B-9C. Further still, the length of the color progress bar may indicate countdown information, e.g., a longer length of the color progress bar may indicate closer in time to the starting live-streaming time of the second live-streaming room or to an end time of the first live-streaming room, and when the length of the color progress bar reaches the length of the interaction control 320, it is indicated that the second live-streaming room is about to start live-streaming. Further still, the countdown information displayed by the interaction control 320 corresponds to the length of the color progress bar. For example, the countdown information displayed by the interaction control 320 gradually decreases and the length of the color progress bar increases accordingly. Compared with a traditional method in which the live-streaming interface only prompts time information such as the time when the performance starts, a certain duration after which a program starts, a certain duration after which the program ends, the present disclosure highlights the live-streaming room account and the countdown information corresponding to the live-streaming program in the ordered room in an animation form, enhancing the perception of the user on the ordered display interface, solving problems such as discrete program information and poor association between the live-streaming room and programs, facilitating the user to know related information of the next program in time, and improving the user experience.

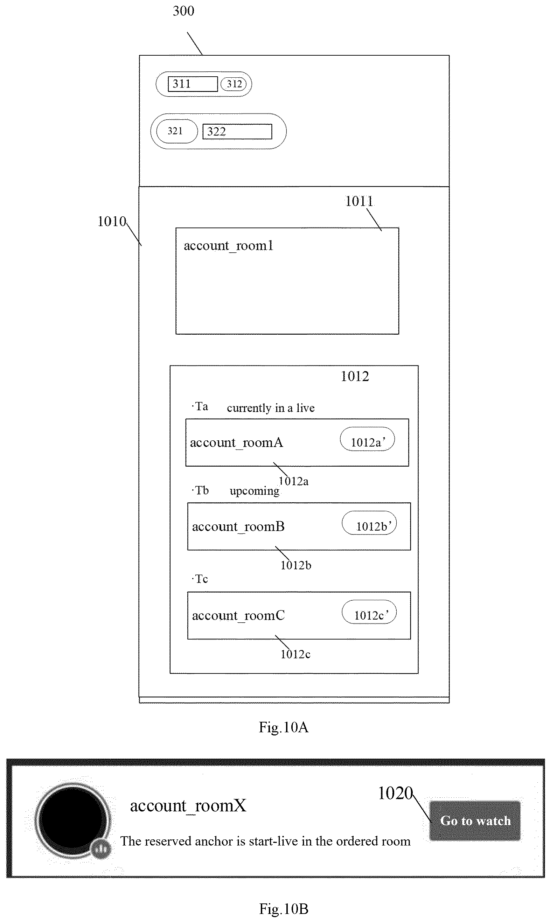

In the traditional method, program information in the ordered display interface is discrete, but the user may wish to have an overall knowledge of all programs associated with the first target live-streaming account; according to the present application, a program list associated with the first target live-streaming account can be displayed by triggering the task identifier 321, wherein the task is a task that the first live-streaming room and the second live-streaming room complete a live-streaming of a preset type under the first target live-streaming account. The task of the live-streaming of a preset type is an starting live-streaming task of a live-streaming of e.g., a singing type, dance type. The preset type can be determined according to a live-streaming type corresponding to the first target live-streaming account, for example, when the type corresponding to the first target live-streaming account is a singing type live-streaming, the first live-streaming room and the second live-streaming room complete an starting live-streaming task of the singing type live-streaming under the first target live-streaming account. That is to say, the task is a task that each channel live-streaming room associated with the ordered room (namely, each live-streaming room participating in a live-streaming performance in the ordered room, such as the aforementioned first live-streaming room, the aforementioned second live-streaming room, and the like) completes a preset type of live-streaming performance (program performance) in the ordered room live-streaming room, where the preset type corresponds to the type of the ordered room live-streaming room, and if the ordered room is a dance-type live-streaming room, the program task of the performance is also a dance-type. Referring to Fig. 10A, Fig. 10A shows a schematic diagram of a task interface according to an embodiment of the present disclosure. In Fig. 10A, the user may perform a fifth trigger operation O5 on the task identifier 321 in the first live-streaming interface 300, to generate an instruction for displaying the task. In response to the instruction for displaying the task, a task interface 1010 may be displayed in the first live-streaming interface 300. Further, the task interface 1010 may display task detail information 1012a corresponding to the first live-streaming room and/or task detail information 1012b corresponding to the second live-streaming room, where the task is a task that the first live-streaming room roomA and the second live-streaming room roomB complete a live-streaming of a preset type under the first target live-streaming account account_room1. Further, the task interface 1010 may also display recommendation information 1011 for the first target live-streaming account account_room1. The recommendation information is used for recommending information of the first target live-streaming account, and for example, may be a recommendation card for the ordered room live-streaming room. Further, a task detail information component 1012 includes task detail information 1012a corresponding to the first live-streaming room and a corresponding interaction identifier 1012a', and a corresponding first live-streaming time period Ta is further displayed at an associated position (which may be around) of the task detail information 1012a corresponding to the first live-streaming room, and the corresponding interaction identifier 1012a' may be used to follow the first live-streaming account account_roomA. Further, the task detail information includes a task start time and end time, and a task state.

Further, the task detail information component 1012 further includes task detail information 1012b, 1012c of other live-streaming rooms and respective interaction identifiers 1012b', 1012c', which are used for following the corresponding live-streaming rooms or reserving tasks of the corresponding live-streaming rooms.

In some embodiments, in response to that the task state corresponding to the first live-streaming account identifier is a task-ongoing state or a task-completed state, a follow identifier corresponding to the first live-streaming account identifier is displayed at an associated position of the live-streaming room task identifier of the first live-streaming account identifier. The task-ongoing state refers to a state in which the live-streaming task is ongoing. The task-completed state refers to a state in which the live-streaming task is completed. For example, in Fig. 10A, if the task state corresponding to the first live-streaming account identifier account_roomA is currently on live, i.e., the task-ongoing state, the corresponding interaction identifier 10 12a' is a follow identifier.

In some embodiments, in response to that the task state of the second live-streaming account identifier is a task-not-started state, a reservation identifier corresponding to the second live-streaming account identifier is displayed at the associated position of the live-streaming room task identifier of the second live-streaming account identifier. The reservation identifier is used for reserving a next live-streaming or a next task. Optionally, the reservation identifier may include a reservation control. In response to a trigger operation on the reservation control, the next task or the next live-streaming can be reserved. Accordingly, at a time point corresponding to the next task or the next live-streaming, a notification message may be sent to the corresponding user. For example, in Fig. 10A, if the task state corresponding to the second live-streaming account identifier account_roomB is an not-started state, the corresponding interaction identifier 1012a' is the reservation identifier.

In some embodiments, in response to a reservation instruction for a corresponding live-streaming room in the task detail information component 1012, a live-streaming in the corresponding live-streaming room is reserved. And when a duration T4 is left from the reserved starting live-streaming time of the live-streaming room, the user is prompted that the duration T4 is left before the reserved live-streaming room starts live-streaming. For example, in Fig. 10A, the user may perform a sixth trigger operation O6 on the interaction identifier 1012b' of the second live-streaming room, to generate a reservation instruction for the second live-streaming room roomB. In response to the reservation instruction for the second live-streaming room roomB, it is reserved to view the second live-streaming room roomB in a time period Tb. And when the duration T4 (T4 can be 0, indicating the reserved program starts) is left from the start of the reserved second live-streaming room roomB, the user is prompted that the duration T4 is left before the reserved second live-streaming room roomB starts live-streaming; as shown in Fig. 10B, Fig. 10B shows a schematic diagram of a reservation prompt interface according to an embodiment of the present disclosure. In Fig. 10B, the reservation prompt interface may display a jump identifier 1020, and the user may directly switch to a live-streaming interface corresponding to the live-streaming room account account_roomX or a live-streaming interface corresponding to the first target live-streaming account account_room1, through the jump identifier 1020.

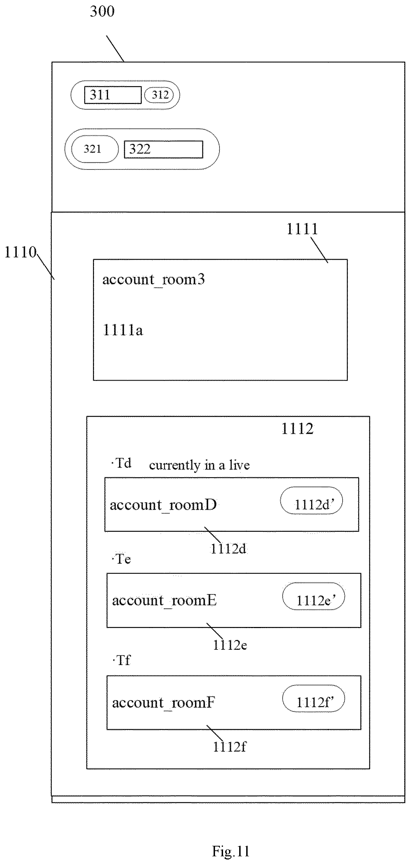

In some embodiments, recommendation information corresponding to a second target live-streaming account identifier is displayed on the task interface, and the method further comprises: in response to a switching request for the recommendation information, displaying recommendation information corresponding to a third target live-streaming account identifier on the task interface. Specifically, the user may perform a swipe operation on the recommendation information 1011 of the first target live-streaming account account_room1 in Fig. 10A, to generate an instruction for switching recommendation information; and in response to the instruction of the recommendation information, display the recommendation information corresponding to the second target live-streaming account identifier on the task interface. Similarly, in response to a switching request for the recommendation information of the second target live-streaming account identifier account_room2, the recommendation information corresponding to the third target live-streaming account identifier is displayed on the task interface, as shown in Fig. 11. Fig. 11 shows a schematic diagram of a task interface according to an embodiment of the present disclosure. In Fig. 11, recommendation information 1111 corresponding to the third target live-streaming account identifier account_room3 may also be displayed in the task interface 1110. Further, the third target live-streaming account identifier account_room3 and an activity theme identifier 1111a currently on live are displayed in the recommendation information 1111 corresponding to the third target live-streaming account identifier account_room3. Further, a task detail information component 1112 can also be displayed in the task interface 1110, and the task detail information component 1112 includes task detail information 1112d-1112f of at least one third live-streaming room roomD, roomE and roomF and respective interaction identifiers 1112d'-1112f'. The interaction identifiers 1112d'-1112f may be used to follow the corresponding live-streaming rooms or to reserve tasks of the corresponding live-streaming rooms.

In some embodiments, a live-streaming of the third live-streaming room is reserved in response to a reservation instruction for the third live-streaming room. And when a duration T5 is left from the starting live-streaming time of the reserved third live-streaming room, the user is prompted that the duration T5 is left before the reserved third live-streaming room starts live-streaming. For example, in Fig. 11, the user may perform a seventh trigger operation O7 on the interaction identifiers 1112d'-1112f of the third live-streaming rooms roomD-roomF, to generate a reservation instruction for the third live-streaming room. In response to the reservation instruction for the third live-streaming room, a live-streaming of the third live-streaming room is reserved. And when the duration T5 (T5 can be 0, indicating the reserved program starts) is left from the start of the reserved third live-streaming room, the user is prompted that the duration T5 is left before the reserved program starts live-streaming. For another example, the user may perform an eighth trigger operation O8 on the interaction identifiers 1112d'-1112f of the third live-streaming account in the third live-streaming room, so as to generate a follow instruction of the third live-streaming account. The third anchor account is followed in response to the follow instruction of the third anchor account.

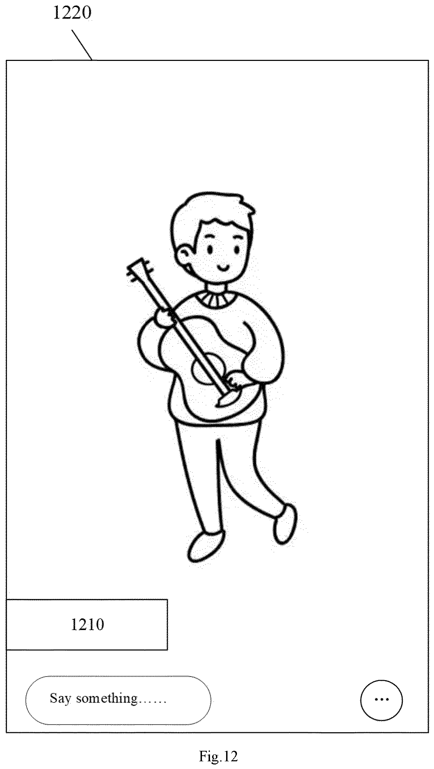

In some embodiments, in response to an instruction for entering a third live-streaming interface corresponding to the third anchor account, it is switched from the first live-streaming interface to the third live-streaming interface. It should be understood that the third live-streaming interface may refer to a display interface of the third live-streaming room, and may also be a display interface corresponding to the first target live-streaming account account_room 1. Specifically, the user may perform a ninth trigger operation O9 on the task detail information 1112d in Fig. 11, to generate an instruction for entering a third live-streaming interface corresponding to a third live-streaming account_roomD. In response to the instruction for entering the third live-streaming interface corresponding to the third live-streaming account account_roomD, it is switched from the first live-streaming interface to the third live-streaming interface 1200, as shown in Fig. 12, where Fig. 12 shows a schematic diagram of a third live-streaming interface according to an embodiment of the present disclosure. Therefore, the user can switch the target live-streaming account (namely the ordered live-streaming account) by switching the recommendation information for the task interface, and further, it is switched to live-streaming interfaces of other target live-streaming accounts based on the trigger operation on the task of the switched target live-streaming account. The fast, convenient and smooth switching between different target live-streaming accounts can be realized, improving the user experience.

In some embodiments, in response to an instruction for returning to the display interface corresponding to the first target live-streaming account, it is switched from the third live-streaming interface to the first live-streaming interface. Specifically, the third live-streaming interface 1200 in Fig. 12 can display a return control 1210, for returning to the previous live-streaming interface. For example, the user may perform a tenth trigger operation O10 on the return control 1210 to generate an instruction for returning to the previous live-streaming interface. In response to the instruction for returning to the previous live-streaming interface, it is switched from the third live-streaming interface 1200 to the first live-streaming interface 300 (shown in Fig. 3).

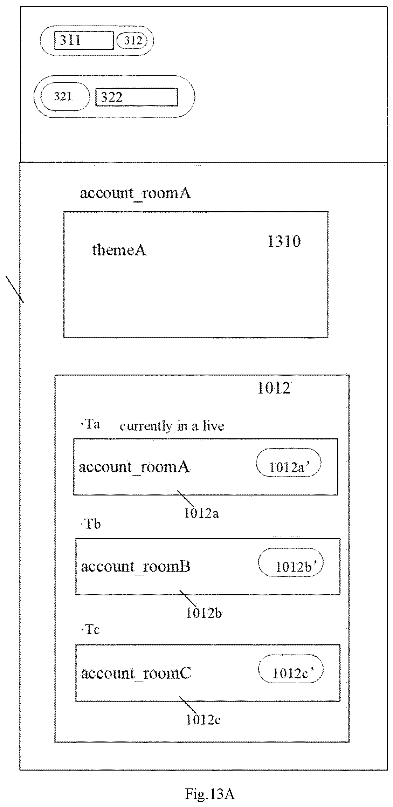

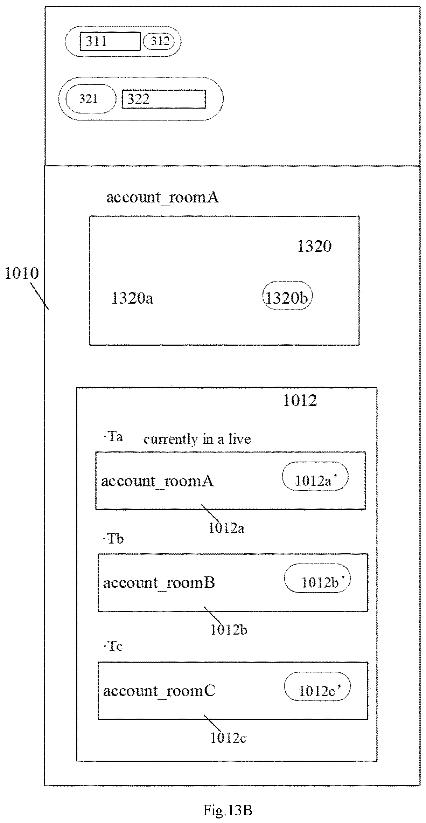

In some embodiments, in response to a task switching request corresponding to the first target live-streaming account identifier, a next task and its reservation identifier corresponding to the first target live-streaming account identifier are displayed. Specifically see Figs. 13A-13B which show schematic diagrams of a task interface according to embodiments of the present disclosure. In Fig. 13A, the task interface 1010 corresponding to the first target live-streaming account identifier account_room1 includes a theme identifier 1310 of the current task, and the theme identifier 1310 of the current task may include a first activity theme identifier themeA, which indicates a first activity in which the current task is located. The user can perform a swipe operation on the first activity theme identifier 1310 to generate a task switching request. In response to the task switching request, it is switched from the first activity theme identifier 1310 to a second activity theme identifier 1320, as shown in Fig. 13B. The second activity theme identifier 1320 in Fig. 13B includes next task information 1320a corresponding to the first target live-streaming account identifier and a reservation identifier 1320B, and the user may perform a trigger operation on the reservation identifier 1320B to reserve a next task 1320.

It should be noted that the live-streaming account identifier in the embodiment of the present disclosure may be identification information such as an avatar, a name (e.g., a nickname), or an ID of the live-streaming account. For example, the first target live-streaming account identifier may be an avatar, name (e.g., nickname), or ID of the first target live-streaming account. The second target live-streaming account identifier may be an avatar, name (e.g., nickname), or ID of the second target live-streaming account. The first/second/third live-streaming account identifier may be an avatar, name (e.g., nickname), or ID corresponding to the first/second/third live-streaming account.

As can be seen from the foregoing, the live-streaming method provided by the present disclosure, by displaying the first live-streaming room identifier associated with the first target live-streaming account, and displaying the second live-streaming room identifier associated with the first target live-streaming account and the starting live-streaming information of the second live-streaming room when the preset condition is met, enhances the association between the starting live-streaming information of various live-streaming rooms, so that the user can conveniently know starting live-streaming information of a sub-live-streaming room which currently on live and starting live-streaming information of a sub-live-streaming room which is to start live-streaming in time, improving the user experience.

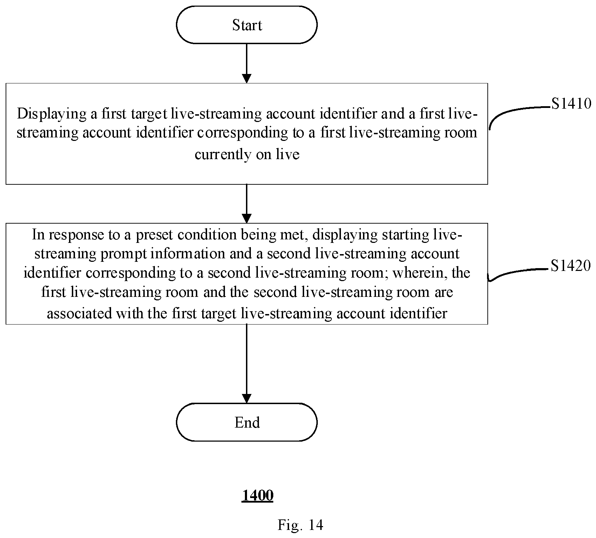

Referring to Fig. 14, Fig. 14 shows a schematic flow diagram of a live-streaming method according to an embodiment of the present disclosure. The live-streaming method 1400 can be applied to a terminal, and comprises the following steps:
step S1410, displaying a first target live-streaming account identifier (for example, the first target live-streaming account identifier 311 in Fig. 3) and a first live-streaming account identifier (for example, the first live-streaming account identifier 322 in Fig. 3) corresponding to a first live-streaming room (for example, the first live-streaming room roomA) currently on live; and
step S1420, in response to a preset condition being met, displaying starting live-streaming prompt information and a second live-streaming account identifier corresponding to a second live-streaming room (for example, the first live-streaming room roomB); wherein, the first live-streaming room and the second live-streaming room are associated with the first target live-streaming account identifier.

In some embodiments, the displaying a first target live-streaming account identifier and a first live-streaming account identifier corresponding to a first live-streaming room currently on live, comprises: displaying the first target live-streaming account identifier and the first live-streaming account identifier corresponding to the first live-streaming room currently on live on a first live-streaming interface (for example, the first live-streaming interface 300 in Fig. 3); and
the in response to a preset condition being met, displaying starting live-streaming prompt information and a second live-streaming account identifier corresponding to a second live-streaming room, comprises: in response to the preset condition being met, displaying the starting live-streaming prompt information and the second live-streaming account identifier corresponding to the second live-streaming room on the first live-streaming interface or a second live-streaming interface.

In some embodiments, the preset condition includes: a period from a current time to an starting live-streaming time corresponding to the second live-streaming room being less than a first preset duration, or the number of associated objects of the second live-streaming room being greater than a preset number.

In some embodiments, the method 1400 further comprises:
under the condition that the first live-streaming account identifier is displayed, displaying a first interaction identifier (for example, the interaction identifier 323 in Fig. 3) corresponding to the first live-streaming account identifier; and in response to a trigger operation on the first interaction identifier, switching a state of the first interaction identifier; and/or
under the condition that the second live-streaming account identifier is displayed, displaying a second interaction identifier corresponding to the second live-streaming account identifier; and in response to a trigger operation on the second interaction identifier, switching a state of the second interaction identifier.

In some embodiments, the method 1400 further comprises:
displaying a first target interaction identifier (e.g., the interaction identifier 312 in Fig. 3) corresponding to the first target live-streaming account identifier at an associated position of the first target live-streaming account identifier;
displaying a first interaction identifier (for example, the interaction identifier 323 in Fig. 3) corresponding to the first live-streaming account identifier at an associated position of the first live-streaming account identifier; and
in response to a trigger operation on any one of the first target interaction identifier and the first interaction identifier, highlighting the other one (as shown in Figs. 5-6).

In some embodiments, the method 1400 further comprises:
displaying a first target interaction identifier corresponding to the first target live-streaming account identifier at an associated position of the first target live-streaming account identifier;
displaying a second interaction identifier corresponding to the second live-streaming account identifier at an associated position of the second live-streaming account identifier; and
in response to a trigger operation on any one of the first target interaction identifier and the second interaction identifier, highlighting the other one.

In some embodiments, the method 1400 further comprises:
in response to a period from a current time to an starting live-streaming time corresponding to the second live-streaming room being less than a second preset duration, performing at least one of: highlighting an interaction identifier corresponding to the first target live-streaming account identifier, highlighting an interaction identifier corresponding to the first live-streaming account identifier, highlighting an interaction identifier corresponding to the second live-streaming account identifier, or displaying a countdown identifier corresponding to the second live-streaming room so as to prompt a remaining time for starting live-streaming of the second live-streaming room.

In some embodiments, the method 1400 further comprises:
in response to a trigger operation on a first interaction identifier corresponding to the first live-streaming room or a second interaction identifier corresponding to the second live-streaming room, displaying a composite interaction identifier; and
in response to a trigger operation on the composite interaction identifier, switching a state of a first target interaction identifier corresponding to the first target live-streaming account identifier, and switching a state of the first interaction identifier or the second interaction identifier.

In some embodiments, the method 1400 further comprises:
in response to a trigger operation on a first interaction identifier corresponding to the first live-streaming room or a second interaction identifier corresponding to the second live-streaming room, displaying composite interaction prompt information; and
in response to a trigger operation on the first interaction identifier or the second interaction identifier, switching a state of a first target interaction identifier corresponding to the first target live-streaming account identifier, and switching a state of the first interaction identifier or the second interaction identifier.

In some embodiments, the first display interface further displays a task identifier, and the method 1400 further comprises:
in response to a trigger operation on the task identifier, displaying a task interface corresponding to the first target live-streaming account identifier, wherein task detail information corresponding to the first live-streaming room and/or task detail information corresponding to the second live-streaming room are displayed on the task interface, and the task is a task that the first live-streaming room and the second live-streaming room complete a live-streaming of a preset type under the first target live-streaming account.

In some embodiments, recommendation information corresponding to a second target live-streaming account identifier is displayed on the task interface, and the method 1400 further comprises:
in response to a switching request for the recommendation information, displaying recommendation information corresponding to a third target live-streaming account identifier on the task interface.

In some embodiments, the method 1400 further comprises:
in response to a task state corresponding to the first live-streaming account identifier being a task-ongoing state or a task-completed state, displaying a follow identifier corresponding to the first live-streaming account identifier at an associated position of a live-streaming room task identifier of the first live-streaming account identifier; and/or,
in response to a task state of the second live-streaming account identifier being a task-not-started state, displaying a reservation identifier corresponding to the second live-streaming account identifier at an associated position of a live-streaming room task identifier of the second live-streaming account identifier.

In some embodiments, the method 1400 further comprises: in response to a task switching request corresponding to the first target live-streaming account identifier, displaying a next task and a reservation identifier corresponding to the first target live-streaming account identifier.

In some embodiments, the method 1400 further comprises: in response to a trigger operation on a first interaction identifier corresponding to the first live-streaming room or a second interaction identifier corresponding to the second live-streaming room, switching a state corresponding to the first interaction identifier or the second interaction identifier, and switching the first interaction identifier or the second interaction identifier to display a composite interaction identifier; and
in response to a trigger operation on the composite interaction identifier, switching a state of a first target interaction identifier corresponding to the first target live-streaming account identifier.

It should be noted that the method of the embodiments of the present disclosure may be executed by a single device, such as a computer or a server. The method of the embodiments can also be applied to a distributed scenario and is completed by the mutual cooperation of a plurality of devices. In such a distributed scenario, one of the plurality of devices may only perform one or more steps of the method of the embodiments of the present disclosure, and the plurality of devices interact with each other to complete the method.

It should be noted that some embodiments of the present disclosure are described above. Other embodiments are within the scope of the appended claims. In some cases, the actions or steps recited in the claims may be performed in a different order than in the embodiments described above and still achieve desirable results. In addition, the processes depicted in the accompanying drawings do not necessarily require the particular order shown, or sequential order, to achieve the desirable results. In some embodiments, multitasking and parallel processing may also be possible or may be advantageous.

Based on the same inventive concept, corresponding to any of the above embodiments, the present disclosure further provides a live-streaming apparatus, comprising:
a display module, configured to display a first target live-streaming account identifier and a first live-streaming account identifier corresponding to a first live-streaming room currently on live; and
in response to a preset condition being met, display starting live-streaming prompt information and a second live-streaming account identifier corresponding to a second live-streaming room; wherein, the first live-streaming room and the second live-streaming room are associated with the first target live-streaming account identifier.

For convenience of description, the above apparatus is divided into various modules by functions to be described separately. Of course, the functions of the various modules may be implemented in the same one or more software and/or hardware in practicing the present disclosure.

The apparatus of the foregoing embodiment is used to implement the corresponding live-streaming method in any of the foregoing embodiments, and has the beneficial effects of the corresponding method embodiments, which are not described herein again.

Based on the same inventive concept, corresponding to any of the above method embodiments, the present disclosure further provides a non-transitory computer-readable storage medium storing computer instructions, for causing the computer to perform the live-streaming method according to any of the above embodiments.

The computer-readable medium of the embodiment includes both permanent and non-permanent, removable and non-removable medium, and information storage may be implemented by any method or technology. The information may be computer readable instructions, data structure, modules of program, or other data. Examples of the computer storage medium include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read only memory (CD-ROM), digital versatile disks (DVD) or other optical storage, magnetic cassette, magnetic tape magnetic disk storage or other magnetic storage devices, or any other non-transmission medium, which can be used to store information that can be accessed by a computing device.

The computer instructions stored in the storage medium of the foregoing embodiment are used to enable the computer to execute the live-streaming method described in any embodiment, and have the beneficial effects of the corresponding method embodiments, which are not described herein again.

Those of ordinary skill in the art will understand that: the discussion of any embodiment above is exemplary only, and is not intended to imply that the scope of the present disclosure, including the claims, is limited to these examples; within the concept of the present disclosure, also technical features in the above embodiments or in different embodiments may be combined, steps may be implemented in any order, and there are many other variations of different aspects of the embodiments of the present disclosure as described above, which are not provided in detail for the sake of brevity.

In addition, well-known power/ground connections to integrated circuit (IC) chips and other components may or may not be shown within the provided drawings for simplicity of illustration and discussion, so as not to obscure the embodiments of the present disclosure. Further, the apparatus may be shown in a block diagram form in order to avoid obscuring the embodiments of the present disclosure, and also in view of the fact that details of the implementations of such block diagram apparatus are highly dependent upon the platform on which the embodiments of the present disclosure are to be implemented (i.e., the details should be well within purview of one skilled in the art). Where specific details (e.g., circuits) are set forth in order to describe example embodiments of the present disclosure, it should be apparent to one skilled in the art that the embodiments of the present disclosure can be practiced without, or with variation of, these specific details. Accordingly, the description is to be regarded as illustrative instead of restrictive.

While the present disclosure has been described in conjunction with specific embodiments thereof, many alternatives, modifications, and variations thereof will be apparent to those skilled in the art in light of the foregoing description. For example, other memory architectures (e.g., dynamic RAM (DRAM)) may use the embodiments discussed.

The embodiments of the present disclosure are intended to embrace all such alternatives, modifications and variations which fall within the broad scope of the appended claims. Therefore, any omissions, modifications, equivalents, improvements, and the like that may be made without departing from the spirit or scope of the embodiments of the present disclosure are intended to be included within the scope of the present disclosure.

## Claims

1. A live-streaming method, comprising:
displaying a first target live-streaming account identifier and a first live-streaming account identifier corresponding to a first live-streaming room currently on live; and
in response to a preset condition being met, displaying starting live-streaming prompt information and a second live-streaming account identifier corresponding to a second live-streaming room; wherein, the first live-streaming room and the second live-streaming room are associated with the first target live-streaming account identifier.

2. The method according to claim 1, wherein,
the displaying a first target live-streaming account identifier and a first live-streaming account identifier corresponding to a first live-streaming room currently on live, comprises: displaying the first target live-streaming account identifier and the first live-streaming account identifier corresponding to the first live-streaming room currently on live on a first live-streaming interface; and
the in response to a preset condition being met, displaying starting live-streaming prompt information and a second live-streaming account identifier corresponding to a second live-streaming room, comprises: in response to the preset condition being met, displaying the starting live-streaming prompt information and the second live-streaming account identifier corresponding to the second live-streaming room on the first live-streaming interface or a second live-streaming interface.

3. The method according to claim 1, wherein, the preset condition comprises: a period from a current time to an starting live-streaming time corresponding to the second live-streaming room being less than a first preset duration, or the number of associated objects of the second live-streaming room being greater than a preset number.

4. The method according to claim 1, wherein, the method further comprises:
in response to the first live-streaming account identifier being displayed, displaying a first interaction identifier corresponding to the first live-streaming account identifier; and in response to a trigger operation on the first interaction identifier, switching a state of the first interaction identifier; and/or
in response to the second live-streaming account identifier being displayed, displaying a second interaction identifier corresponding to the second live-streaming account identifier; and in response to a trigger operation on the second interaction identifier, switching a state of the second interaction identifier.

5. The method according to claim 1, wherein, the method further comprises:
displaying a first target interaction identifier corresponding to the first target live-streaming account identifier at an associated position of the first target live-streaming account identifier;
displaying a first interaction identifier corresponding to the first live-streaming account identifier at an associated position of the first live-streaming account identifier; and
in response to a trigger operation on any one of the first target interaction identifier and the first interaction identifier, highlighting the other one of the first target interaction identifier and the first interaction identifier.

6. The method according to claim 1, wherein, the method further comprises:
displaying a first target interaction identifier corresponding to the first target live-streaming account identifier at an associated position of the first target live-streaming account identifier;
displaying a second interaction identifier corresponding to the second live-streaming account identifier at an associated position of the second live-streaming account identifier; and
in response to a trigger operation on any one of the first target interaction identifier and the second interaction identifier, highlighting the other one of the first target interaction identifier and the second interaction identifier.

7. The method according to claim 6, wherein, the method further comprises:
in response to a period from a current time to an starting live-streaming time corresponding to the second live-streaming room being less than a second preset duration, performing at least one of: highlighting the first target interaction identifier, highlighting the first interaction identifier, highlighting the second interaction identifier, or displaying a countdown identifier corresponding to the second live-streaming room so as to prompt a remaining time for starting live-streaming of the second live-streaming room.

8. The method according to claim 1, wherein, the method further comprises:
in response to a trigger operation on a first interaction identifier corresponding to the first live-streaming room or a second interaction identifier corresponding to the second live-streaming room, displaying a composite interaction identifier; and
in response to a trigger operation on the composite interaction identifier, switching a state of a first target interaction identifier corresponding to the first target live-streaming account identifier, and switching a state of the first interaction identifier or the second interaction identifier.

9. The method according to claim 1, wherein, the method further comprises:
in response to a trigger operation on a first interaction identifier corresponding to the first live-streaming room or a second interaction identifier corresponding to the second live-streaming room, displaying composite interaction prompt information; and
in response to a trigger operation on the first interaction identifier or the second interaction identifier, switching a state of a first target interaction identifier corresponding to the first target live-streaming account identifier, and switching a state of the first interaction identifier or the second interaction identifier.

10. The method according to claim 1, wherein, the first display interface further displays a task identifier, and the method further comprises:
in response to a trigger operation on the task identifier, displaying a task interface corresponding to the first target live-streaming account identifier, wherein task detail information corresponding to the first live-streaming room and/or task detail information corresponding to the second live-streaming room are displayed on the task interface, and the task is a task that the first live-streaming room and the second live-streaming room complete a live-streaming of a preset type under the first target live-streaming account.

11. The method according to claim 10, wherein, recommendation information corresponding to a second target live-streaming account identifier is displayed on the task interface, and the method further comprises:
in response to a switching request for the recommendation information, displaying recommendation information corresponding to a third target live-streaming account identifier on the task interface.

12. The method according to claim 10, wherein, the method further comprises:
in response to a task state corresponding to the first live-streaming account identifier being a task-ongoing state or a task-completed state, displaying a follow identifier corresponding to the first live-streaming account identifier at an associated position of a live-streaming room task identifier of the first live-streaming account identifier; and/or,
in response to a task state of the second live-streaming account identifier being a task-not-started state, displaying a reservation identifier corresponding to the second live-streaming account identifier at an associated position of a live-streaming room task identifier of the second live-streaming account identifier.

13. The method according to claim 10, wherein, the method further comprises: in response to a task switching request corresponding to the first target live-streaming account identifier, displaying a next task and a reservation identifier corresponding to the first target live-streaming account identifier.

14. The method according to claim 1, wherein, the method further comprises: in response to a trigger operation on a first interaction identifier corresponding to the first live-streaming room or a second interaction identifier corresponding to the second live-streaming room, switching a state corresponding to the first interaction identifier or the second interaction identifier, and switching the first interaction identifier or the second interaction identifier to display a composite interaction identifier; and
in response to a trigger operation on the composite interaction identifier, switching a state of a first target interaction identifier corresponding to the first target live-streaming account identifier.

15. A live-streaming apparatus, comprising:
a display module, configured to display a first target live-streaming account identifier and a first live-streaming account identifier corresponding to a first live-streaming room currently on live; and
in response to a preset condition being met, display starting live-streaming prompt information and a second live-streaming account identifier corresponding to a second live-streaming room; wherein, the first live-streaming room and the second live-streaming room are associated with the first target live-streaming account identifier.

16. An electronic device, comprising a memory, a processor, and a computer program stored on the memory and runnable on the processor, the processor, when executing the program, performing the method according to any of claims 1 to 14.

17. A non-transitory computer-readable storage medium storing computer instructions, for causing a computer to perform the method according to any of claims 1 to 14.

18. A computer program product comprising computer program instructions which, when run on a computer, cause the computer to perform the method according to any of claims 1 to 14.
